# FASCICULE DE BREVET EUROPEEN

(11) **EP 2 016 700 B1**
(45) Date de publication et mention de la délivrance du brevet: **06.09.2017**
(21) Numéro de dépôt: 07728863.7
(22) Date de dépôt: 07.05.2007
(51) Int. Cl.: H04L 9/32, H04L 29/06, H04L 9/08

(54) **PROCEDE D'ACTIVATION D'UN TERMINAL**
ENDGERÄTEAKTIVIERUNGSVERFAHREN
TERMINAL ACTIVATION METHOD

(30) Priorité: 11.05.2006 FR 0604195
(43) Date de publication de la demande: 21.01.2009
(73) Titulaire: INGENICO GROUP, 75015 Paris (FR)
(72) Inventeur: COLOM, François, F-75015 Paris (FR); LAMBERT, Patrick, F-75015 Paris (FR)
(74) Mandataire: Vidon Brevets & Stratégie
(86) Numéro de dépôt international: PCT/EP2007/054410
(87) Numéro de publication internationale: WO 2007/131905

(56) Documents cités:
- EP-A- 1 534 043
- EP-A1- 1 422 864
- US-B1- 6 992 563
- MENEZES, VANSTONE, OORSCHOT: "Handbook of Applied Cryptography" 1997, CRC PRESS LLC , USA , XP002429331 page 397 - page 399 page 524 - page 527 page 551 - page 553

## Description

La présente invention concerne le domaine technique général de la sécurité des services, et plus particulièrement le domaine technique de l'activation d'un terminal sécurisé pour la saisie de données confidentielles.

Elle est notamment adaptée aux terminaux de paiement électronique et aux distributeurs de billets de banque.

### PRESENTATION GENERALE DE L'ART ANTERIEUR

Lors de la mise en place d'un terminal sécurisé, ou après une opération de maintenance sur un terminal sécurisé (qui implique une désactivation du terminal), il est nécessaire de contrôler l'intégrité du terminal avant l'activation ou la réactivation du terminal.

Pour garantir la sécurité du terminal, son activation doit être effectuée par deux opérateurs distincts conformément aux directives de la norme PED's PCI. Cette double activation présente l'inconvénient de nécessiter la présence de deux opérateurs sur le site où se trouve le terminal.

Le but général de l'invention est de proposer un procédé et des moyens associés permettant une double activation du terminal ne nécessitant la présence que d'un opérateur sur le site où se trouve le terminal.

### PRESENTATION DE L'INVENTION

A cet effet on prévoit un procédé d'activation d'un terminal par un opérateur, l'activation du terminal permettant des échanges d'informations sécurisés entre le terminal et un serveur sécurisé, caractérisé en ce qu'il comprend les étapes suivantes pour le terminal :
- recevoir de l'opérateur une première information d'activation,
- recevoir d'un serveur d'habilitation une deuxième information d'activation ,
- utiliser les première et deuxième informations d'activation pour activer le terminal.

Ainsi, l'activation du terminal nécessite la réception de deux informations d'activation reçues de deux entités distinctes : les première et deuxième informations d'activation sont complémentaires et permettent ensemble l'activation du terminal. En d'autres termes, la réception de l'une seulement des deux informations d'activation ne permet pas l'activation du terminal : il faut encore que le terminal reçoive l'autre des deux informations d'activation.

On entend, dans le cadre de la présente invention par « activer un terminal » le fait de rendre ce terminal opérationnel.

Le serveur sécurisé est par exemple un serveur bancaire et le terminal un terminal de paiement.

Le procédé selon l'invention permet une double activation du terminal ne nécessitant la présence que d'une personne physique sur le site où se trouve le terminal à activer, le serveur d'habilitation distant jouant le rôle d'opérateur virtuel.

Des aspects préférés, mais non limitatifs du procédé d'activation selon l'invention sont les suivants :
- les première et deuxième informations d'activation sont chiffrées, le procédé comprenant l'étape suivante pour le terminal :
   o déchiffrer les première et deuxième informations d'activation chiffrées en utilisant au moins une clé de chiffrement attribuée au terminal et stockée dans une mémoire du terminal,

Ceci permet d'éviter que les informations d'activation échangées entre le terminal, l'opérateur et le serveur d'habilitation ne puissent être réutilisées par un tiers malveillant.
- le procédé comprend en outre les étapes suivantes :
   pour le terminal :
      o envoyer au serveur d'habilitation, un identifiant d'opérateur attribué à l'opérateur et un identifiant de terminal attribué au terminal,
   pour le serveur d'habilitation :
      o vérifier, en fonction des identifiants d'opérateur et de terminal reçus du terminal, que l'opérateur est habilité à activer le terminal et que l'activation du terminal est autorisée, la deuxième information d'activation étant envoyée au terminal si l'opérateur est habilité à activer le terminal et si l'activation du terminal est autorisée,
- le procédé comprend en outre les étapes suivantes :
   pour le serveur d'habilitation :
      o rechercher dans une base de données la pluralité de clés de chiffrement attribuées au terminal,
      o créer la deuxième information d'activation en fonction d'informations d'activation dans la base de données,
      o chiffrer la deuxième information d'activation en utilisant la clé de chiffrement attribuée au terminal,
      ∘ envoyer la deuxième information d'activation chiffrée au terminal,
   pour le terminal :
   ∘ déchiffrer la deuxième information de chiffrement chiffrée en utilisant la clé de chiffrement attribuée au terminal et stockée dans la mémoire du terminal,
- le procédé comprend en outre l'étape suivante pour le terminal :
   ∘ envoyer au serveur d'habilitation une datation utilisée comme aléa lors de l'étape de chiffrement de la deuxième information d'activation,
- le procédé comprend en outre l'étape suivante pour le serveur d'habilitation :
   ∘ inscrire dans la base de données l'identifiant de terminal, l'identifiant d'opérateur et l'instant d'intervention sur le terminal.
- l'identifiant d'opérateur comprend un numéro d'opérateur unique stocké sur un moyen d'activation comprenant la première information d'activation,
- l'identifiant d'opérateur comprend en outre un numéro d'identification personnel destiné à être saisi sur le terminal, le numéro d'identification personnel étant associé au numéro d'opérateur,
   le procédé comprenant une étape consistant à vérifier si le numéro saisi par l'opérateur sur le terminal est égal au numéro d'identification personnel associé au numéro d'opérateur.

L'invention concerne également un serveur apte à mettre en oeuvre le procédé décrit ci-dessus.

L'invention concerne également un terminal apte à mettre en oeuvre le procédé décrit ci-dessus.

### PRESENTATION DES FIGURES

D'autres caractéristiques, buts et avantages de la présente invention ressortiront encore de la description qui suit, laquelle est purement illustrative et non limitative et doit être lue en regard des dessins annexés sur lesquels :
- la figure 1 les différents échanges entre des moyens permettant de mettre en oeuvre le procédé,
- la figure 2 schématise les étapes mises en oeuvre dans un mode de réalisation du procédé.

### DESCRIPTION DE L'INVENTION

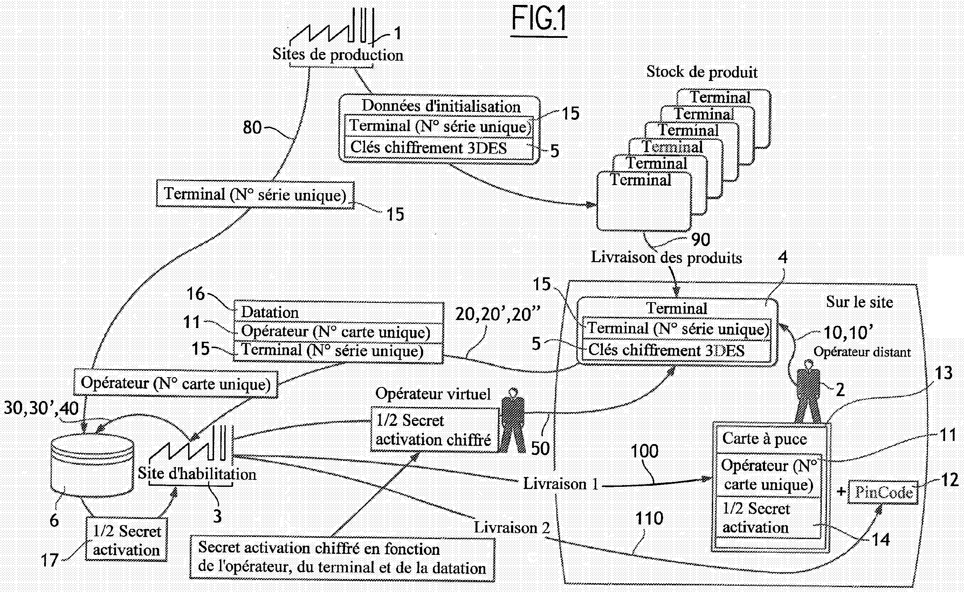

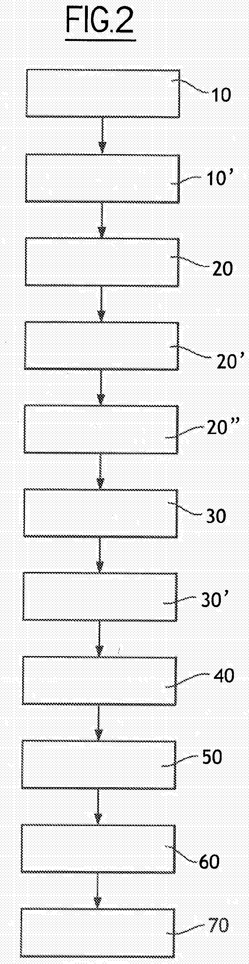

En référence aux figures 1 et 2, des moyens de mise en oeuvre d'un mode de réalisation du procédé selon l'invention, et les étapes d'un mode de réalisation du procédé selon l'invention sont illustrées.

Ces moyens comprennent un site de production 1, un opérateur 2, un serveur d'habilitation 3, et au moins un terminal 4.

Le site de production 1 est une entité qui fabrique des terminaux. Le site de production 1 est également chargé de la livraison des terminaux fabriqués sur les sites pour lesquels ces terminaux sont destinés.

L'opérateur 2 est une personne physique habilitée à intervenir sur les terminaux. L'opérateur 2 se déplace sur les sites où les terminaux ont été livrés pour vérifier l'intégrité de ces terminaux. L'opérateur 2 est un des deux protagonistes nécessaires à la double activation du terminal 4.

Le serveur d'habilitation 3 est une entité chargée de l'habilitation des opérateurs 2. Le serveur d'habilitation 3 envoie à l'opérateur 2 des moyens permettant à l'opérateur 2 de s'identifier et des moyens nécessaires à l'activation du terminal 4. Le serveur d'habilitation 3 est également chargé de vérifier les informations reçues du terminal 4 à activer. Le serveur d'habilitation 3 est l'autre des deux protagonistes nécessaires à la double activation du terminal 4.

Le terminal 4 est un périphérique sécurisé comprenant une ou des clé(s) de chiffrement 5 qui sont stockée(s) dans une mémoire du terminal 4, et qui permet(tent) le chiffrement d'une information à transmettre, ou le déchiffrement d'une information chiffrée reçue par le terminal. Le terminal est destiné à échanger avec un serveur sécurisé (non représenté) une fois qu'il a été activé, c'est-à-dire une fois que le terminal est prêt à recevoir les secrets partagés avec les serveurs sécurisés. Le terminal est par exemple un terminal de paiement et le serveur sécurisé un serveur bancaire.

Le procédé d'activation de terminal comprend les étapes suivantes.

Pour l'activation d'un terminal 4, un opérateur 2 habilité se rend sur le site où se trouve le terminal 4 (ou le terminal est rapatrié sur un site où se trouve l'opérateur 2).

Après une vérification de l'intégrité du terminal 4 par l'opérateur 2 habilité, le procédé d'activation est mis en oeuvre.

Dans une étape 10 du procédé d'activation du terminal 4, l'opérateur 2 s'identifie auprès du terminal 4. Pour cela, il envoie au terminal 4 un identifiant d'opérateur personnel qui lui a été préalablement fournit par le serveur d'habilitation 3.

L'identifiant d'opérateur est spécifique à chaque opérateur 2 : en d'autres termes, deux opérateurs 2 distincts ne peuvent pas avoir le même identifiant d'opérateur. Ceci permet de distinguer les opérateurs 2 habilités les uns des autres, et d'identifier l'opérateur 2 intervenant sur le terminal 4 parmi l'ensemble des opérateurs 2 habilités.

Dans un mode de réalisation, l'identifiant d'opérateur comprend un numéro d'opérateur 11 personnel unique stocké sur un moyen d'activation du terminal 4. Le moyen d'activation du terminal 4 est par exemple une carte à puce 13 destinée à être insérée dans le terminal 4.

Ce numéro d'opérateur 11 stocké dans la carte à puce 13 peut être associé à un numéro d'identification personnel 12 (code PIN) que l'opérateur 2 doit saisir sur un clavier (non représenté) du terminal 4.

Le fait que l'identification de l'opérateur 2 nécessite l'insertion de la carte à puce 13 et la saisie d'un numéro d'identification personnel 12 sur le terminal 4 limite le risque qu'un tiers puisse se substituer à l'opérateur 2 habilité en cas de perte ou de vol de la carte à puce 13. Toute perte ou vol de carte à puce 13 est déclaré au site d'habilitation 3 en vue d'une mise en opposition de la carte à puce 13 sur le serveur d'habilitation 3.

Dans le cas où l'identifiant d'opérateur comprend un numéro d'opérateur 11 stocké sur la carte à puce 13 et un numéro d'identification personnel 12 à saisir sur le clavier du terminal 4, le terminal 4 vérifie que ces deux parties de l'identifiant d'opérateur sont bien correspondantes.

Dans le cas où l'opérateur 2 saisit trois fois consécutives des numéros d'identification personnels erronés (c'est-à-dire si le code saisit sur le clavier du terminal est différent du code PIN associé à la carte à puce), une fonction de blocage de la carte à puce 13 de l'opérateur 2 peut par exemple être activée.

Dans une autre étape 10' du procédé d'activation, l'opérateur 2 envoie au terminal 4 une première information d'activation 14. Optionnellement, la première information d'activation 14 est chiffrée en utilisant la (ou les) clé(s) de chiffrement attribuée(s) et stockée(s) dans la mémoire du terminal 4. Le terminal stocke dans une mémoire la première information d'activation.

L'envoi au terminal 4 de l'identifiant d'opérateur et de la première information d'activation 14 peuvent être effectuées simultanément ou séquentiellement.

Dans un mode de réalisation, la première information d'activation 14 est enregistrée sur la carte à puce 13 de l'opérateur 2.

Dans une autre étape 20 du procédé, le terminal 4 envoie au serveur d'habilitation 3 l'identifiant d'opérateur (et plus particulièrement le numéro d'opérateur 11 stocké sur le carte à puce 13) au serveur d'habilitation 3.

Le terminal 4 envoie 20' également au serveur d'habilitation 3 un identifiant de terminal 15 qui lui est associé, et qui est stocké dans une mémoire du terminal 4.

L'identifiant de terminal 15 est spécifique à chaque terminal 4 : en d'autres termes, deux terminaux 4 distincts ne peuvent pas avoir le même identifiant de terminal. Ceci permet de distinguer les terminaux 4 les uns des autres.

Dans un mode de réalisation, l'identifiant de terminal 15 comprend un numéro de série unique.

Dans un mode de réalisation, le terminal 4 envoie 20" également au serveur d'habilitation 3 une datation 16 qui comprend par exemple l'année, le mois, le jour et l'heure correspondant à l'instant d'intervention de l'opérateur 2 sur le terminal 4.

Les envois 20, 20', 20" de l'identifiant d'opérateur, de l'identifiant de terminal et de la datation peuvent être effectués simultanément ou séquentiellement.

Dans une autre étape du procédé, le serveur d'habilitation 3 reçoit l'identifiant d'opérateur, l'identifiant de terminal et la datation et vérifie ces informations.

Le serveur d'habilitation 3 vérifie 30 que l'opérateur 2 est habilité à intervenir sur le terminal 4. Pour cela, le serveur d'habilitation 3 consulte une base de données 6 dans laquelle les informations relatives à l'habilitation de l'opérateur 2 sont stockées.

Le serveur d'habilitation 3 vérifie 30' également que le terminal 4 est habilité à être activé, c'est-à-dire que le terminal 4 n'a pas été retiré du parc des terminaux exploitables parce qu'il a été volé ou est devenu impropre à l'usage, trop vieux ou démodé. Les informations relatives au caractère exploitable d'un terminal sont stockées dans la base de données 6 du serveur d'habilitation 3.

Dans un mode de réalisation, le serveur d'habilitation 3 stocke 40 dans la base de données 6 les informations relatives à l'intervention en cours. Par exemple, le serveur d'habilitation 3 stocke dans la base de données 6 la datation 16 envoyée par le terminal 4, l'identifiant de terminal et l'identifiant de l'opérateur 2. Ceci permet une traçabilité des opérations effectuées sur le terminal 4.

Le serveur d'habilitation 3 crée également une deuxième information d'activation 17 associée au terminal en fonction des données stockée dans la base de données 6.

Si l'opérateur 2 est habilité à activer le terminal 4 et que le terminal 4 est exploitable, le serveur d'habilitation 3 envoie 50 au terminal 4 la deuxième information d'activation 17.

Optionnellement, le serveur d'habilitation 3 peut chiffrer la deuxième information d'activation 17, par exemple en utilisant la (ou les) clé(s) de chiffrement attribuée(s) au terminal qui peut(vent) être stockée(s) préalablement dans la base de données 6. Le chiffrement de la deuxième information d'activation 17 en utilisant la (ou les) clé(s) de chiffrement attribuée(s) au terminal peut être fonction :
- de l'identifiant d'opérateur,
- de l'identifiant de terminal,
- de la datation.

La datation est utilisée en tant qu'aléa lors du chiffrement.

Dans une autre étape du procédé, le terminal 4 reçoit la deuxième information d'activation.

Dans le cas où les première et deuxième informations d'activation sont chiffrées, le terminal 4 déchiffre 60 les première et deuxième informations d'activation chiffrées en utilisant la (ou les) clé(s) de chiffrement attribuée(s) au terminal. *

Pour déchiffrer la deuxième information d'activation, le terminal utilise la datation, l'identifiant d'opérateur et de terminal, ainsi que la (ou les) clé(s) de chiffrement attribuée(s) au terminal et stockée(s) dans la mémoire du terminal. En effet, la datation, l'identifiant d'opérateur et de terminal sont connues du terminal 4 qui les a transmis au serveur d'habilitation 3.

Une fois la deuxième information d'activation 17 reçue (et les première et deuxième information d'activation déchiffrées), le terminal 4 est prêt à recevoir les secrets partagés avec les serveurs sécurisés: le terminal 4 est activé.

Ainsi, le procédé selon l'invention permet une double activation du terminal 4, cette double activation ne nécessitant la présence que d'un opérateur 2 sur le site où se trouve le terminal 4.

Préalablement à la mise en oeuvre du procédé d'activation, deux procédés sont mis en oeuvre :
- un procédé de création du terminal,
- un procédé d'habilitation d'opérateur.

A titre indicatif, des exemples de procédés de création de terminal et d'habilitation d'opérateur vont maintenant être décrits en référence à la figure 2, ces procédés étant donnés à titre purement indicatif.

Le procédé de création de terminal comprend les étapes suivantes.

Dans une étape du procédé de création de terminaux, le site de production 1 fabrique un terminal 4 et lui associe un identifiant de terminal 15. L'identifiant de terminal 15 est stocké dans une mémoire de terminal 4.

Dans une autre étape du procédé de création de terminaux, le site de production 1 reçoit du serveur d'habilitation 3 un ensemble de clés de chiffrement qui ont été générées par le serveur d'habilitation 3.

Les clés de chiffrement sont par exemple des clés de chiffrement 3DES. Bien entendu, le procédé selon l'invention n'est pas limité à cet exemple de clés de chiffrement 3DES, les clés de chiffrement pouvant être des clés RSA ou tout autre type de clés connu de l'homme du métier, le choix du type de clés étant fonction de l'algorithme de chiffrement utilisé.

Dans une autre étape du procédé de création du terminal, le site de production 1 choisit une (ou) de(s) clé(s) de chiffrement qu'il attribue au terminal 4 créé parmi l'ensemble des clés de chiffrement reçues du serveur d'habilitation 3.

Dans une autre étape du procédé de création du terminal, le site de production 1 stocke dans une mémoire sécurisée du terminal 4 la (ou les) clé(s) de chiffrement 5 choisie(s) pour le terminal 4.

Dans une autre étape 80 du procédé de création du terminal, le site de production 1 envoie au serveur d'habilitation 3 l'identifiant du terminal 15. Le site de production 1 envoie également la (ou les) clé(s) de chiffrement 5 attribuée(s) au terminal 4.

Dans une autre étape du procédé de création du terminal, le serveur d'habilitation 3 reçoit la (ou les) clé(s) de chiffrement attribuée(s) au terminal 4 et l'identifiant du terminal.

Le serveur d'habilitation 3 stocke dans la base de données 6 l'identifiant du terminal 15 et la (ou les) clé(s) de chiffrement 5 attribuée(s) au terminal 4, de sorte que le serveur d'habilitation 3 est apte à retrouver la (ou les) clé(s) de chiffrement 5 attribuée(s) au terminal 4 en fonction de l'identifiant du terminal 15.

Par ailleurs, le fait que la (ou les) clé(s) de chiffrement 5 soit(ent) enregistrée(s) dans le terminal 4 et dans le serveur d'habilitation 3 permet des échanges chiffrés entre le terminal 4 et le serveur d'habilitation 3, en particulier lors du transfert de la deuxième information d'activation 17.

Dans une autre étape 90 du procédé de création du terminal, le site de production 1 livre les terminaux sur les sites auxquels ces terminaux sont dédiés.

Les terminaux sont alors activables par la mise en oeuvre du procédé d'activation décrit précédemment.

Le procédé d'habilitation d'un opérateur 2 comprend les étapes suivantes.

Dans une étape du procédé d'habilitation, le serveur d'habilitation 3 envoie à l'opérateur 2 un identifiant d'opérateur lui permettant de s'identifier auprès du terminal 4 à activer.

Comme décrit précédemment, cet identifiant peut comprendre :
- un numéro d'opérateur stocké sur une carte à puce destinée à être insérée dans le terminal 4 par l'opérateur 2 dans une étape du procédé d'activation décrit ci-dessus,
- un numéro d'identification personnel associé au numéro d'opérateur et que l'opérateur 2 doit saisir sur le terminal 4.

L'envoi de la carte à puce sur laquelle est stocké le numéro d'opérateur et du numéro d'identification personnel associé peut être réalisé en deux temps :
- la carte à puce étant envoyée à l'opérateur 2 dans une première livraison 100,
- le numéro d'identification personnel étant envoyé à l'opérateur 2 dans une deuxième livraison 110.

Ceci permet de limiter le risque qu'un tiers interceptant l'une des livraisons 100, 110 soit en possession de l'ensemble des informations permettant à un opérateur 2 habilité de s'identifier. Ainsi, le risque qu'un tiers puisse se substituer à un opérateur 2 habilité est limité.

Le lecteur appréciera que le partage du message globale permettant l'activation du terminal en :
- la première information d'activation, et
- la deuxième information d'activation
peut être réalisée par le serveur d'habilitation qui ne stocke dans la base de donnée que la deuxième information d'activation, la première information d'activation étant stockée sur la carte à puce de l'opérateur (après chiffrement de celle-ci grâce à la (ou les) clé(s) de chiffrement attribuée(s) au terminal dans les modes de réalisation ou un tel chiffrement de la première information d'activation est effectué).

Les différents modes de réalisation du procédé selon l'invention présentent donc de nombreux avantages :
- les opérateurs 2 intervenant sur les terminaux peuvent être identifiés puisqu'un identifiant personnel unique leur est attribué,
- un opérateur 2 ne peut activer seul un terminal puisque cette activation nécessite la réception par le terminal 4 de deux informations d'activation, l'opérateur 2 n'étant en possession que d'une seule de ces deux informations,
- la perte du moyen d'activation de l'opérateur 2 (c'est-à-dire par exemple la carte à puce) ne permet pas à un tiers de se substituer à l'opérateur 2 habilité lorsque l'identification de l'opérateur 2 nécessite la saisie d'un numéro d'identification personnel sur le terminal 4,

- les interventions effectuées sur un terminal 4 peuvent être tracées dans les modes de réalisation où le serveur d'habilitation 3 enregistre dans la base de données l'identifiant d'opérateur, de terminal et la datation correspondant à l'instant d'intervention,
- l'enregistrement des interventions effectuées sur un terminal 4 est centralisé sur la base de données du serveur d'habilitation 3, ce qui facilite le suivi des interventions effectuées sur l'ensemble des terminaux, et facilite également le contrôle à posteriori d'éventuelles dérives de l'opérateur 2,
- le chiffrement des première et deuxième informations d'activation permet d'éviter que ces informations puissent être interceptées par un tiers et réutilisées pour activer frauduleusement le terminal ou d'autres terminaux.

### REFERENCES

- 10: identification de l'opérateur auprès du terminal
- 10': envoi, par l'opérateur, d'une première information d'activation au terminal
- 20: envoi, par le terminal, de l'identifiant d'opérateur à un serveur d'habilitation
- 20': envoi, par le terminal, d'un identifiant de terminal au serveur d'habilitation
- 20": envoi, par le terminal, d'une datation au serveur d'habilitation
- 30: vérification, par le serveur d'habilitation, de l'habilitation de l'opérateur
- 30': vérification, par le serveur d'habilitation, du caractère exploitable du terminal
- 40: stockage, par le serveur d'habilitation, des informations relatives à l'intervention en cours
- 50: chiffrage, par le serveur d'habilitation, d'une deuxième information d'activation
- 60: envoi, par le serveur d'habilitation, de la deuxième information d'activation
- 70: déchiffrage, par le terminal de la deuxième information d'activation chiffrée

## Revendications

1. Procédé d'activation d'un terminal de paiement (4) par un opérateur, l'activation du terminal de paiement (4) permettant des échanges d'informations sécurisés entre le terminal de paiement (4) et un serveur sécurisé, **caractérisé en ce qu'**il comprend les étapes suivantes pour le terminal (4) :
- recevoir de l'opérateur (2) une première information d'activation chiffrée après une vérification de l'intégralité du terminal de paiement par l'opérateur,
- recevoir d'un serveur d'habilitation (3) une deuxième information d'activation chiffrée,
- déchiffrer les première et deuxième informations chiffrées en utilisant au moins une clé de chiffrement attribuée au terminal et stockée dans une mémoire du terminal de paiement (4),
- utiliser les première et deuxième informations d'activation pour activer le terminal de paiement.

2. Procédé selon la revendication précédente, **caractérisé en ce que** le procédé comprend en outre les étapes suivantes :
pour le terminal (4) :
- envoyer au serveur d'habilitation (3), un identifiant d'opérateur attribué à l'opérateur (2) et un identifiant de terminal attribué au terminal (4),
pour le serveur d'habilitation (3) :
- vérifier, en fonction des identifiants d'opérateur et de terminal reçus du terminal (4), que l'opérateur (2) est habilité à activer le terminal (4) et que l'activation du terminal (4) est autorisée, la deuxième information d'activation étant envoyée au terminal si l'opérateur (2) est habilité à activer le terminal (4) et si l'activation du terminal (4) est autorisée.

3. Procédé selon l'une des revendications précédentes, **caractérisé en ce que** le procédé comprend en outre les étapes suivantes :
pour le serveur d'habilitation (3) :
- rechercher dans une base de données la clé de chiffrement attribuée au terminal (4),
- créer la deuxième information d'activation en fonction des informations contenues dans la base de données,
- chiffrer la deuxième information d'activation en utilisant la clé de chiffrement attribuée au terminal,
- envoyer la deuxième information d'activation chiffrée au terminal, pour le terminal (4) :
- déchiffrer la deuxième information de d'activation chiffrée en utilisant la clé de chiffrement attribuée au terminal et stockée dans la mémoire du terminal.

4. Procédé selon la revendication précédente, **caractérisé en ce que** le procédé comprend en outre l'étape suivante :
pour le terminal (4) :
- envoyer au serveur d'habilitation (3) une datation utilisée comme aléa lors de l'étape de chiffrement de la deuxième information d'activation.

5. Procédé selon l'une des revendications précédentes, **caractérisé en ce que** le procédé comprend en outre l'étape suivante pour le serveur d'habilitation (3) :
- inscrire dans la base de données l'identifiant de terminal, l'identifiant d'opérateur et l'instant d'intervention sur le terminal (4).

6. Procédé selon l'une des revendications précédentes, **caractérisé en ce que** l'identifiant d'opérateur comprend un numéro d'opérateur unique stocké sur un moyen d'activation comprenant la première information d'activation.

7. Procédé selon la revendication précédente, **caractérisé en ce que** l'identifiant d'opérateur comprend en outre un numéro d'identification personnel destiné à être saisi sur le terminal (4), le numéro d'identification personnel étant associé au numéro d'opérateur, le procédé comprenant une étape consistant à vérifier que le numéro saisi par l'opérateur sur le terminal est égal au numéro d'identification personnel associé au numéro d'opérateur.

8. Terminal, **caractérisé en ce qu'**il comprend des moyens pour mettre en oeuvre le procédé selon l'une des revendications 1 à 7.

9. Système comprenant un serveur d'habilitation et un terminal **caractérisé en ce qu'**il comprend des moyens pour mettre en oeuvre le procédé selon l'une des revendications 1 à 7.

## Patentansprüche

1. Verfahren zur Aktivierung eines Zahlungsendgerätes (4) durch einen Bediener, wobei die Aktivierung des Zahlungsendgerätes (4) gesicherten Informationsaustausch zwischen dem Zahlungsendgerät (4) und einem gesicherten Server ermöglicht, **dadurch gekennzeichnet, dass** es die folgenden Schritte für das Endgerät (4) aufweist:
- Empfangen von dem Bediener (2) einer ersten verschlüsselten Aktivierungsinformation nach einem Überprüfen der Vollständigkeit des Zahlungsendgerätes durch den Bediener,
- Empfangen von einem Berechtigungsserver (3) einer zweiten verschlüsselten Aktivierungsinformation,
- Entschlüsseln der ersten und zweiten Aktivierungsinformation unter Verwendung von mindestens einem Verschlüsselungsschlüssel, der dem Endgerät zugeordnet ist und in einem Speicher des Zahlungsendgerätes (4) gespeichert ist,
- Verwenden der ersten und zweiten Aktivierungsinformation, um das Zahlungsendgerät zu aktivieren.

2. Verfahren nach dem vorhergehenden Anspruch, **dadurch gekennzeichnet, dass** das Verfahren ferner die folgenden Schritte aufweist:
für das Endgerät (4):
- Schicken einer Kennung des Bedieners, die dem Bediener (2) zugeordnet ist, und einer Kennung des Endgeräts, die dem Endgerät (4) zugeordnet ist, an den Berechtigungsserver (3),
für den Berechtigungsserver (3):
- Überprüfen, in Abhängigkeit von der Kennung des Bedieners und der Kennung des Endgeräts, die von dem Endgerät (4) empfangen werden, dass der Bediener (4) berechtigt ist, das Endgerät (4) zu aktivieren und dass das Aktivieren des Endgeräts (4) genehmigt ist, wobei die zweite Aktivierungsinformation zu dem Endgerät geschickt wird, wenn der Bediener (2) berechtigt ist, das Endgerät (4) zu aktivieren und wenn das Aktivieren des Endgeräts (4) genehmigt ist.

3. Verfahren nach einem der vorhergehenden Ansprüche, **dadurch gekennzeichnet, dass** das Verfahren ferner die folgenden Schritte aufweist:
für den Berechtigungsserver (3):
- Suchen in einer Datenbank des Verschlüsselungsschlüssels, der dem Endgerät (4) zugeordnet ist,
- Erstellen der zweiten Aktivierungsinformation in Abhängigkeit von den Informationen, die in der Datenbank enthalten sind,
- Verschlüsseln der zweiten Aktivierungsinformation unter Verwendung des Verschlüsselungsschlüssels, der dem Endgerät zugeordnet ist,
- Schicken der zweiten verschlüsselten Aktivierungsinformation an das Endgerät,
für das Endgerät (4):
- Entschlüsseln der zweiten Aktivierungsinformation unter Verwendung des Verschlüsselungsschlüssels, der dem Endgerät zugeordnet ist und in dem Speicher des Endgerätes gespeichert ist.

4. Verfahren nach dem vorhergehenden Anspruch, **dadurch gekennzeichnet, dass** das Verfahren ferner den folgenden Schritt aufweist:
für das Endgerät (4):
- Schicken von einer Datierung, die als Zufallszahl bei dem Schritt des Verschlüsselns der zweiten Aktivierungsinformation verwendet wird, an den Berechtigungsserver (3).

5. Verfahren nach einem der vorhergehenden Ansprüche, **dadurch gekennzeichnet, dass** das Verfahren ferner den folgenden Schritt für den Berechtigungsserver (3) aufweist:
- Eintragen der Kennung des Endgeräts, der Kennung des Bedieners und des Zeitpunkts des Eingreifens auf dem Endgerät (4) in die Datenbank.

6. Verfahren nach einem der vorhergehenden Ansprüche, **dadurch gekennzeichnet, dass** die Kennung des Bedieners eine eindeutige Bedienernummer aufweist, die auf einem Aktivierungsmittel gespeichert ist, umfassend die erste Aktivierungsinformation.

7. Verfahren nach dem vorhergehenden Anspruch, **dadurch gekennzeichnet, dass** die Kennung des Bedieners ferner eine persönliche Identifikationsnummer aufweist, die dazu bestimmt ist, in das Endgerät (4) eingegeben zu werden, wobei die persönliche Identifikationsnummer der Bedienernummer zugeordnet wird,
wobei das Verfahren einen Schritt aufweist, der darin besteht, zu überprüfen, dass die Nummer, die von dem Bediener in das Endgerät eingegeben wird, gleich der persönlichen Identifikationsnummer ist, die der Bedienernummer zugeordnet wird.

8. Endgerät, **dadurch gekennzeichnet, dass** es Mittel aufweist, um das Verfahren nach einem der Ansprüche 1 bis 7 umzusetzen.

9. System, umfassend einen Berechtigungsserver und ein Endgerät, **dadurch gekennzeichnet, dass** es Mittel aufweist, um das Verfahren nach einem der Ansprüche 1 bis 7 umzusetzen.

## Claims

1. A method for activating a payment terminal (4) by an operator, the activation of the payment terminal (4) allowing exchanges of secured information between the payment terminal (4) and a secured server, **characterized in that** it comprises the following steps for the payment terminal (4):
receiving from the operator (2) a first ciphered piece of activation information after checking the integrity of the payment terminal by the operator,
receiving from an authorization server (3) a second ciphered piece of activation information,
deciphering the first and second ciphered pieces of information by using at least one cipher key assigned to the payment terminal and stored in a memory of the payment terminal (4),
using the first and second pieces of activation information for activating the payment terminal.

2. The method according claim 1, wherein the method further comprises the following steps:
for the payment terminal (4):
sending to the authorization server (3), an operator identifier assigned to the operator (2) and a terminal identifier assigned to the payment terminal (4),
for the authorization server (3):
checking, depending on the operator and terminal identifiers received from the payment terminal (4), that the operator (2) is authorized to activate the payment terminal (4) and that the activation of the payment terminal (4) is authorized, the second piece of activation information being sent to the payment terminal if the operator (2) is authorized to activate the payment terminal (4) and if activation of the payment terminal (4) is authorized.

3. The method according to any of the preceding claims, wherein the method further comprises the following steps:
for the authorization server (3):
searching in a database, for the cipher key assigned to the payment terminal (4),
creating the second piece of activation information depending on information contained in the database,
ciphering the second piece of activation information by using the cipher key assigned to the payment terminal,
sending the second ciphered piece of activation information to the payment terminal (4), for the payment terminal:
deciphering the second ciphered piece of activation information by using the cipher key assigned to the payment terminal and stored in the memory of the payment terminal.

4. The method according to claim 3, wherein the method further comprises the following steps:
for the payment terminal (4):
sending to the authorization server (3) a date used as a random variable during the step for ciphering the second piece of activation information.

5. The method according to any of the preceding claims, wherein the method further comprises the following step for the authorization server (3):
writing into the database, the terminal identifier, the operator identifier and the moment of intervention on the payment terminal (4).

6. The method according to any of the preceding claims, wherein the operator identifier comprises a single operator number stored on an activation means comprising the first piece of activation information.

7. The method according to claim 6, wherein the operator identifier further comprises a personal identification number intended to be entered on the payment terminal (4), the personal identification number being associated with the operator number,
the method comprising a step of checking whether the number entered by the operator on the payment terminal is equal to the personal identification number associated with the operator number.

8. Terminal **characterized in that** it comprises means to implement the method according to any of the claims 1 to 7.

9. System comprising an authorization server and a terminal, **characterized in that** it comprises means to implement the method according to any of the claims 1 to 7.
